# EUROPEAN PATENT APPLICATION

(11) **EP 1 406 098 A1**
(43) Date of publication of application: **07.04.2004**
(21) Application number: 02741421.8
(22) Date of filing: 05.07.2002
(51) Int. Cl.: G02B 6/10, G02B 6/16

(54) **OPTICAL WAVEGUIDE DIFFRACTION GRATING DEVICE AND ITS FABRICATION METHOD**

(30) Priority: 10.07.2001 JP 2001209826; 21.01.2002 JP 2002012017
(71) Applicant: Sumitomo Electric Industries, Ltd., Osaka-shi, Osaka 541-0041 (JP)
(72) Inventor: OHMURA M, Yokohama Work Sumitomo Elec Indus Ltd, Yokohama-shi, Kanagawa 244-8588 (JP); SHIGEHARA M, Yokohama Work Sumitomo Elec Indus Ltd, Yokohama-shi, Kanagawa 244-8588 (JP)
(74) Representative: HOFFMANN - EITLE
(86) International application number: PCT/JP2002/006868
(87) International publication number: WO 2003/007032

(57) **Abstract**

In each of refractive index modulated part 13ₙ of a diffraction grating device, Ln is a refractive index level plane yielding the same refractive index, Aₙ is a line, perpendicular to the refractive index level plane Lₙ, intersecting the optical axis (x axis) of the optical fiber 10, θₙ is the angle formed between the line Aₙ and the optical axis, and Mₙ is the deflection angle plane formed by the line Aₙ and the optical axis (n = 1 to N). Here, in each refractive index modulate part 13ₙ, the line Aₙ is not parallel to the optical axis, whereas the angle θₙ formed between the line Aₙ and the optical axis is not zero. Also, the respective deflection angle planes Mₙ of the refractive index modulated parts 13ₙ do not coincide with each other. A waveguide diffractive grating device ("tilt type diffraction grating device") in which two refractive index modulated parts 13ₙ₁, 13ₙ₂ in N refractive index modulated parts 13₁ to 13_{N} have respective forming areas overlapping each other at least partially, and a manufacturing method thereof, are provided.

## Description

### Technical Field

The present invention relates to an optical waveguide type diffraction grating device in which refractive index modulated parts are formed along a longitudinal direction of an optical waveguide, and a method of making the same.

### Background Art

An optical waveguide type diffraction grating device is one in which a refractive index modulated part is formed over a predetermined area along a longitudinal direction of an optical waveguide (e.g., optical fiber). In a conventional optical waveguide type diffraction grating device, a line perpendicular to a refractive index level plane (a plane yielding the same refractive index in the refractive index modulated part) is parallel to the optical axis of the optical waveguide. In this case, assuming that Λ is the refractive index modulation period, and nₐᵥₑ is the average effective refractive index in the refractive index modulated part of the optical waveguide, the optical waveguide type diffraction grating device selectively reflects light having a reflection wavelength λ satisfying the Bragg condition equation expressed by *λ* = 2*n*_{*ave*}Λ, while transmitting therethrough light having the other wavelengths. The light having the reflection wavelength λ reflected by the refractive index modulated part propagates through the optical waveguide in a direction opposite to its incident direction.

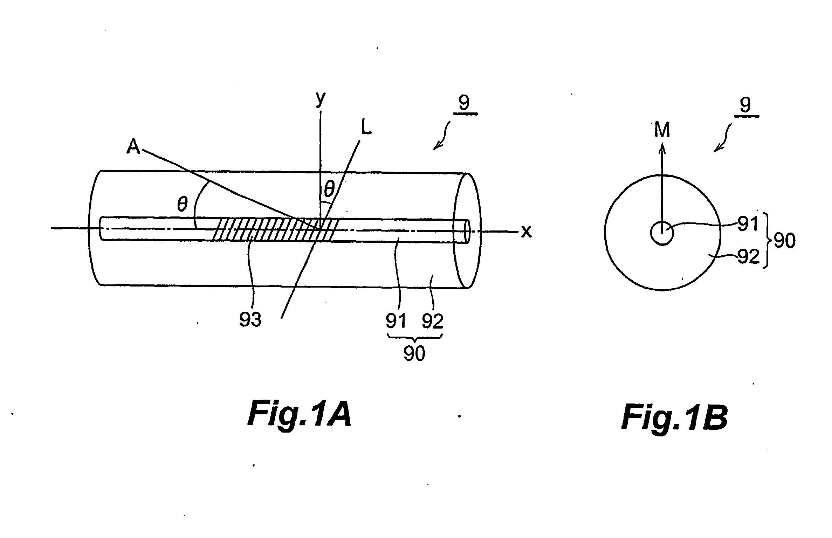

On the other hand, an optical waveguide type diffraction grating device (hereinafter referred to as "tilt type diffraction grating device") in which a line perpendicular to the refractive index level plane is not parallel to the optical axis of the optical waveguide (see, for example, M. J. Holmes, et al., "Ultra Narrow-Band Optical Fibre Sidetap Filters," ECOC' 98, pp. 137-138 (1998)). Figs. 1A and 1B is an explanatory view of a conventional tilt type diffraction grating device. In this drawing, Fig. 1A is a sectional view of the tilt type diffraction grating device cut along a plane including the optical axis thereof, whereas Fig. 1B is a sectional view cut along a plane perpendicular to the optical axis. The conventional tilt type diffraction grating device 2 shown in this drawing is one in which, in an optical fiber 10 having a core region 11 having a high refractive index and a cladding region 12 having a low refractive index, a refractive index modulated part 13 is formed over a predetermined area along a longitudinal direction of the core region 11. A line A perpendicular to a refractive index level plane L in the refractive index modulated part 13 is not parallel to the optical axis (x axis in the drawing) of the optical fiber 10, whereas the angle 8 formed between the line A and the optical axis is not zero. In this case, assuming that Λ is the refractive index modulation period along the line A, and nave is the average effective refractive index in the refractive index modulated part 13, the optical waveguide type diffraction grating device selectively reflects light having a reflection wavelength λ satisfying the Bragg condition equation expressed by λ = 2*n*_{*ave*}Λ/sinθ, while transmitting therethrough light having the other wavelengths. The light having the reflection wavelength λ reflectedby the refractive index modulatedpart 13 is emitted out of the optical fiber 10 without propagating through the optical fiber 10. Namely, the tilt type diffraction grating device 2 acts as a loss filter with low reflection. Therefore, the tilt type diffraction grating device 2 can favorably be used as a gain equalizer for equalizing the gain of an optical fiber amplifier, for example.

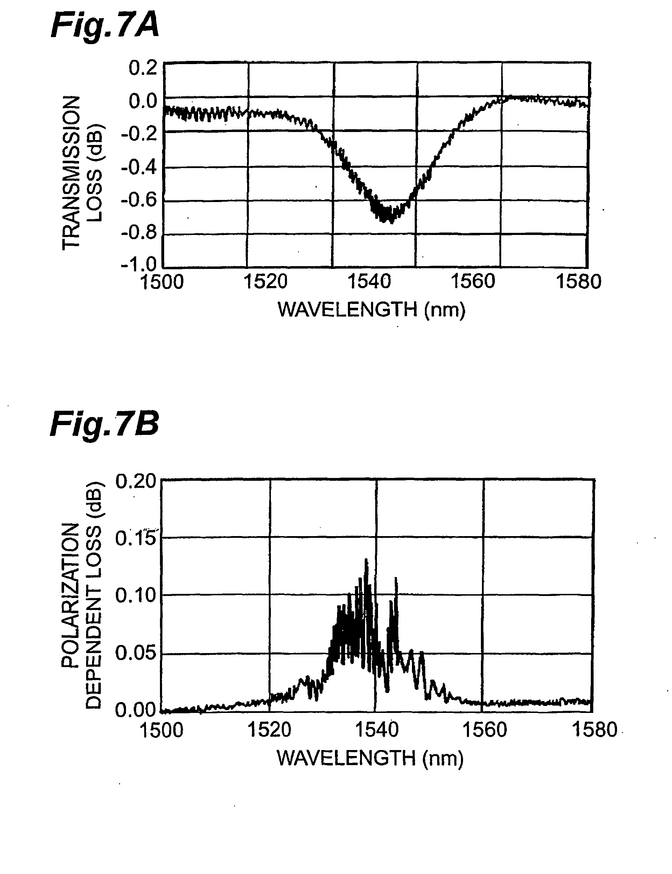

However, the conventional tilt type diffraction grating device 2 has a polarization-dependent loss characteristic. Namely, loss characteristics differ between a polarization mode having a plane of polarization parallel to a deflection angle plane M (xy plane in Fig. 7) formedby the line A and the optical axis, and apolarization mode having a plane of polarization perpendicular to the deflection angle plane M.

For reducing such a polarization-dependent loss, for example, the conventional tilt type diffraction grating device may be twisted about the optical axis, so as to rotate its deflection angle plane along a longitudinal direction. Also, a plurality of refractive index modulated parts may be connected to each other with their respective deflection angle planes differing from each other along the longitudinal direction. In such a manner, the polarization-dependent loss at a given position in the longitudinal direction and that at another position may cancel each other, whereby the polarization-dependent loss can be reduced.

When twisting the tilt type diffraction grating device, however, a long refractive index modulated part is necessary for reducing the polarization-dependent loss, since the optical fiber is made of glass and thus is brittle. Also, margins are necessary for fusion splicing when connecting a plurality of refractive indexmodulatedparts to each other, whereby the total length of refractive index modulated parts increases. At any rate, the conventional tilt type diffraction grating device cannot reduce the polarization-dependent loss with a short length.

For overcoming the problem mentioned above, it is an object of the present invention to provide a short optical waveguide type diffraction grating device (tilt type diffraction grating device) whose polarization-dependent loss is reduced, and a method of making the same.

### Disclosure of the Invention

The optical waveguide type diffraction grating device in accordance with the present invention is characterized in that (1) it comprises N (N being an integer not smaller than 2) refractive index modulated parts formed along a longitudinal direction of an optical waveguide; (2) respective lines perpendicular to refractive index level planes of the N refractive index modulated parts are not parallel to an optical axis of the optical waveguide; (3) respective deflection angle planes formed between lines perpendicular to refractive index level planes of the N refractive index modulated parts and the optical axis of the optical waveguide do not coincide with each other; and (4) two of the N refractive index modulated parts have respective forming areas overlapping each other at least partially.

The method of making an optical waveguide type diffraction grating device in accordance with the present invention comprises the step of forming an optical waveguide type diffraction grating device, wherein, (1) while successively forming N (N being an integer not smaller than 2) refractive index modulated parts along a longitudinal direction of an optical waveguide such that respective lines perpendicular to refractive index level planes are not parallel to an optical axis of the optical waveguide, (2) the n-th (n being an integer of at least 2 but not greater than N) refractive index modulated part is formed such that a deflection angle plane formed between a line perpendicular to a refractive index level plane and the optical axis of the optical waveguide does not coincide with any of respective deflection angle planes of the refractive index modulated parts of already formed first to (n-1) -th refractive index modulated parts; and (3) two of the N refractive index modulated parts have respective forming areas overlapping each other at least partially.

In the optical waveguide type diffraction grating device in accordance with the present invention and the optical waveguide type diffraction grating device made by the method of making an optical waveguide type diffraction grating device in accordance with the present invention, N refractive index modulated parts are formed, respective lines perpendicular to refractive index level planes of refractive index modulated parts are not parallel to the optical axis of the optical waveguide, respective deflection angle planes of refractive index modulated parts do not coincide with each other, and two of the refractive index modulated parts have respective forming areas overlapping each other at least partially. As a consequence of such a configuration, the optical waveguide type diffraction grating device becomes a short one whose polarization-dependent loss is reduced.

The optical waveguide type diffraction grating device in accordance with another aspect of the present invention is characterized in that respective deflection angle planes of the N refractive index modulated parts shift from each
other at intervals of 180 degrees/N about the optical axis of the optical waveguide. The method of making an optical waveguide type diffraction grating device in accordance with another aspect of the present invention is characterized in that an optical waveguide type diffraction grating device is made while shifting respective deflection angle planes of the N refractive index modulated parts from each other at intervals of 180 degrees/N about the optical axis of the optical waveguide. In this case, the optical waveguide type diffraction grating device becomes one whose polarization-dependent loss is efficiently reduced.

The optical waveguide type diffraction grating device in accordance with another aspect of the present invention is characterized in that respective deflection angle planes of the N refractive index modulated parts shift from each other at intervals of 360 degrees/N about the optical axis of the optical waveguide. The method of making an optical waveguide type diffraction grating device in accordance with another aspect of the present invention is characterized in that an optical waveguide type diffraction grating device is made while shifting respective deflection angle planes of the N refractive index modulated parts from each other at intervals of 360 degrees/N about the optical axis of the optical waveguide. In this case, in comparison with the above case, that an optical waveguide type diffraction grating device is made while shifting respective deflection angle planes of the N refractive index modulated parts from each other at intervals of 180 degrees/N about the optical axis of the optical waveguide, the optical waveguide type diffraction grating device becomes one whose polarization-dependent loss is more efficiently reduced. Further although N may be odd, it is preferable that N is even. When N is even, since birefringence caused by axial asymmetry which each of refractive index modulated parts of which respective deflection angle planes are shifted to each other at intervals of 180 degrees/N about the optical axis of the optical waveguide, has, is cancelled, in this point, the optical waveguide type diffraction grating device becomes one whose polarization-dependent loss is further more efficiently reduced.

The optical waveguide type diffraction grating device in accordance with another aspect of the present invention is characterized in that, in N refractive index modulated parts, respective lines perpendicular to refractive index level planes form the same angle with the optical axis of the optical waveguide, respective forming areas have the same length along the longitudinal direction of the optical waveguide, respective refractive index modulation periods are the same, and respective refractive index modulation amplitudes are the same. The method of making an optical waveguide type diffraction grating device in accordance with another aspect of the present invention is characterized in that the N refractive index modulated parts are formed such that respective lines perpendicular to refractive index level planes form the same angle with the optical axis of the optical waveguide, respective forming areas have the same length along the longitudinal direction of the optical waveguide, respective refractive index modulation periods are the same, and respective refractive index modulation amplitudes are the same. The optical waveguide type diffraction grating device becomes one whose polarization-dependent loss is efficiently reduced in this case as well.

The optical waveguide type diffraction grating device in accordance with another aspect of the present invention is characterized in that a polarization-dependent loss at a wavelength yielding the maximum transmission loss is not greater than 1/10 of the maximum transmission loss value. In this case, the optical waveguide type diffraction grating device is favorably used as an optical apparatus (or a part thereof) which is required to have a low polarization-dependent loss in the field of optical communications.

The method of making an optical waveguide type diffraction grating device in accordance with another aspect of the present invention is characterized in that each of the N refractive index modulated parts is formed while monitoring a transmission loss. Alternatively, it is characterized in that each of the N refractive index modulated parts is formed while monitoring a polarization-dependent loss. In this case, the optical waveguide type diffraction grating device made thereby becomes one whose polarization-dependent loss is efficiently reduced.

### Brief Description of the Drawings

Figs. 1A and 1B are explanatory views of a conventional tilt type diffraction grating device.
Fig. 2 is an explanatory view of the optical waveguide type diffraction grating device (tilt type diffraction grating device) in accordance with an embodiment.
Fig. 3 is a perspective view for explaining the method of making an optical waveguide type diffraction grating device in accordance with an embodiment.
Figs 4A, 4B. 4C and 4D are sectional views for explaining the method of making an optical waveguide type diffraction grating device in accordance with the embodiment.
Figs. 5A and 5B is graphs showing transmission characteristics of the optical waveguide type diffraction grating device (tilt type diffraction grating device) in accordance with an example. In the drawing, Fig. 5A is a graph showing a transmission characteristic at the time when the first refractive index modulated part is completely formed, whereas Fig. 5B is a graph showing a transmission characteristic at the time when the second refractive index modulated part is completely formed.
Figs. 6A and 6B are graphs showing transmission and polarization-dependent loss characteristics of the optical waveguide type diffraction grating device (tilt type diffraction grating device) in accordance with the example.
Figs. 7A and 7B are graphs showing transmission and polarization-dependent loss characteristics of the optical waveguide type diffraction grating device (tilt type diffraction grating device) in accordance with the comparative example.
Fig. 8 is an explanatory view of a conventional tilt type diffraction grating device in accordance with the fifth embodiments.
Figs. 9A and 9B are graphs showing characteristics of a tilt type diffraction grating device in which refractive index change inducing light is irradiated from only one direction to form one refractive index modulated part.
Figs. 10A and 10B are graphs showing characteristics of a tilt type diffraction grating device in which refractive index change inducing light is irradiated from two directions which differ from each other by 90° to form two refractive index modulated parts.
Figs. 11A and 11B are graphs showing characteristics of a tilt type diffraction grating device in which refractive index change inducing light is irradiated from four directions, differing from each other by 90° to form four refractive index modulated parts.

### Best Mode for Carrying Out the Invention

In the following, embodiments of the present invention will be explained in detail with reference to the accompanying drawings. In the explanation of the drawings, constituents identical to each other will be referred to with numerals or letters identical to each other without repeating their overlapping descriptions.

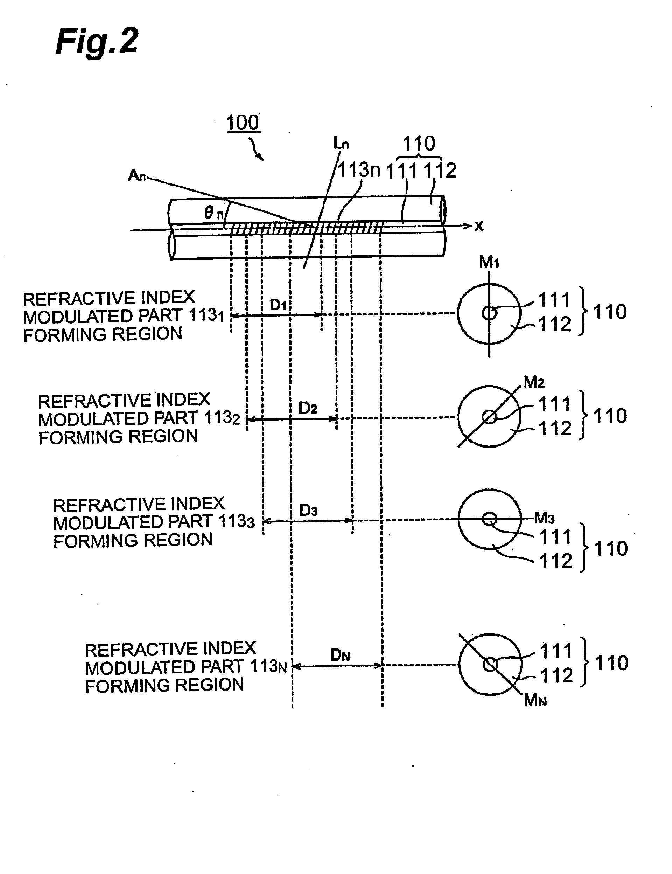

Fig. 2 is an explanatory view of the optical waveguide type diffraction grating device (tilt type diffraction grating device) 1 in accordance with an embodiment. This drawing shows a sectional view cut along a plane including the optical axis, and sectional views cut along planes perpendicular to the optical axis. The tilt type diffraction grating device 1 in accordance with this embodiment shown in the drawing is one in which N (N being an integer not smaller than 2) refractive index modulated parts 13₁ to 13_{N} are formed along the longitudinal direction of an optical fiber 10 which is an optical waveguide. The optical fiber 10 is based on silica glass, and includes a core region 11 doped with GeO₂, and a cladding region 12 surrounding the core region 11.

For each refractive index modulated part 13ₙ (n being a given integer of at least 1 but not greater than N), Lₙ is a refractive index level plane yielding the same refractive index, Aₙ is a line, perpendicular to the refractive index level plane Lₙ, intersecting the optical axis (x axis) of the optical fiber 10, θₙ is the angle formed between the line Aₙ and the optical axis, and Mₙ is the deflection angle plane formed by the line Aₙ and the optical axis.

In each refractive index modulated part 13ₙ, the line An is not parallel to the optical axis, whereas the angle θₙ formed between the line Aₙ and the optical axis is not zero. Namely, each refractive index modulated part 13ₙ is one in which a refractive index modulation having a period Λₙ is formed in the core region 11 along the line Aₙ inclined by the angle θₙ with respect to the optical axis. The respective deflection angle planes Mₙ of refractive index modulated parts 13ₙ do not coincide with each other. Namely, in given two refractive index modulated parts 13ₙ₁, 13ₙ₂ of the N refractive index modulated parts 13₁ to 13_{N}, their respective deflection angle planes Mₙ₁, Mₙ₂ do not coincide with each other.

In the N refractive index modulated parts 13₁ to 13_{N}, two refractive index modulated parts 13ₙ₁, 13ₙ₂ have forming areas overlapping each other at least partially. In the drawing, for example, the forming area of the refractive index modulated part 13₁ partially overlaps the forming area of the refractive index modulated part 13₂, the forming area of the refractive index modulated part 13₃, and the forming area of the refractive index modulated part 13_{N}. Preferably, all the respective forming areas of the N refractive index modulated parts 13₁ to 13_{N} coincide with each other.

Thus, the tilt type diffraction grating device 1 in accordance with this embodiment is formed with N refractive index modulated parts 13₁ to 13_{N}, the angle θₙ of each refractive index modulated part 13ₙ is not zero, the respective deflection angle planes Mₙ of refractive index modulated parts 13ₙ do not coincide with each other, and given two refractive index modulated parts 13ₙ₁, 13ₙ₂ have respective forming areas overlapping each other at least partially. Thus configured tilt type diffraction grating device 1 is a short one whose polarization-dependent loss is reduced.

Preferably, the respective deflection angle planes M₁ to M_{N} of the N refractive index modulated parts 13₁ to 13_{N} shift from each other at intervals of 180 degrees/N about the optical axis of the optical fiber 10. When N = 2, for example, the deflection angle planes M₁ and M₂ are orthogonal to each other. When N = 3, for example, the deflection angle planes M₁ to M₃ shift from each other at intervals of 60 degrees about the optical axis of the optical fiber 10. When the deflection angle planes M₁ to M_{N} are arranged as such, the polarization-dependent loss is efficiently reduced in the tilt type diffraction grating device 1.

Preferably, in the N refractive index modulated parts 13₁ to 13_{N}, lines Aₙ form the same angle θₙ with the optical axis, respective forming areas have the same length Dₙ along the longitudinal direction of the optical fiber 10, respective refractive index modulation periods are the same, and respective refractive index modulation amplitudes are the same. When each refractive index modulated part 13ₙ is formed as such, the polarization-dependent loss is efficiently reduced in the tilt type diffraction grating device 1.

Preferably, at a wavelength yielding the maximum transmission loss, the polarization-dependent loss of the tilt type diffraction grating device 1 in accordance with this embodiment is not greater than 1/10 of the transmission loss maximum value. Such a tilt type diffraction grating device is favorably used as an optical apparatus (or a part thereof) which is required to have a low polarization-dependent loss in the field of optical communications, and can favorably be used as a gain equalizer for equalizing the gain of an optical fiber amplifier, for example.

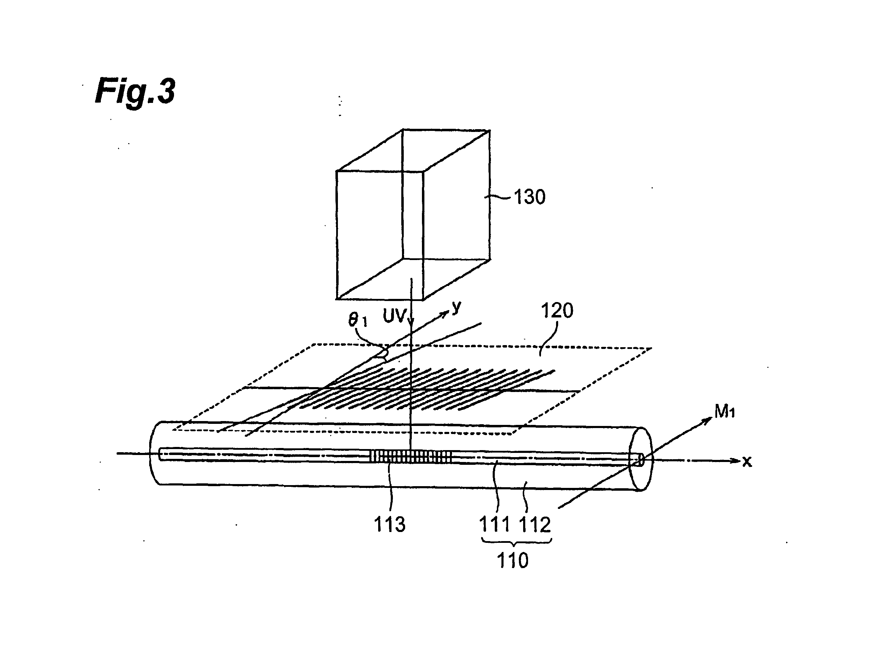

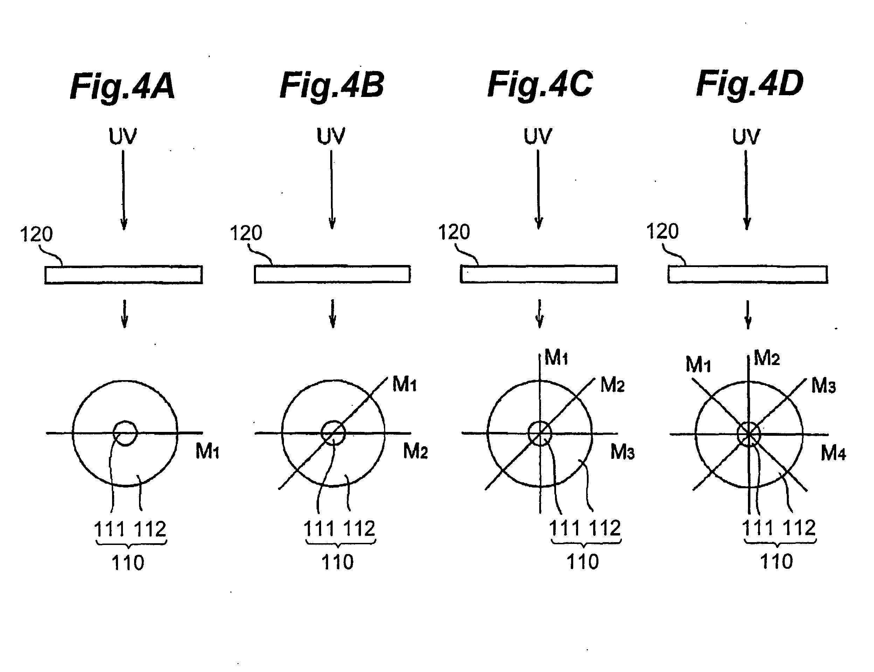

A method of making the optical waveguide type diffraction grating device (tilt type diffraction grating device) 1 in accordance with this embodiment will now be explained. Figs. 3 and 4A - 4D are drawings for explaining the method of making an optical waveguide type diffraction grating device in accordance with this embodiment. Fig. 3 shows a perspective view, whereas Figs. 4A- 4D shows sectional views cut along a plane perpendicular to the optical axis.

First, an optical fiber 10, a phase grating mask 20, and a light source 30 are prepared. As mentioned above, the optical fiber 10 is based on silica glass, and includes a core region 11 doped with GeO₂ and a cladding region 12 surrounding the core region 11. The phase grating mask 20 is one in which one surface of a flat silica glass sheet is formedwith a phase gratingmade of groove-like protrusions and recesses having a period of 2Λ. The light source 30 is one outputting light having a wavelength which induces a refractive index change in the core region 11 of the optical fiber 10 (hereinafter referred to as "refractive index change inducing light"). For example, a KrF excimer laser light source outputting a laser beam having a wavelength of 248 nm as refractive index change inducing light is used.

Then, as shown in Fig. 3, the phase grating mask 20 is arranged laterally with respect to the optical fiber 10 such that its surface formed with the phase grating opposes the optical fiber 10. At that time, the direction of grooves in the phase grating mask 20 inclines by an angle θ₁ with respect to a plane perpendicular to the optical axis of the optical fiber 10. In the state where they are arranged as such, refractive index change inducing light UV outputted from the light source 30 perpendicularly irradiates the phase grating mask 20. Upon irradiation with the refractive index change inducing light UV, (+)first-order diffraction light and (-)first-order diffraction light occur due to a diffracting action of the phase grating mask 20, and interfere with each other, thereby generating interference fringes with a period Λ. In the core region 11 doped with GeO₂ in the optical fiber 10, the refractive index rises in response to the magnitude of energy of the refractive index change inducing light at each position of the interference fringes, thereby forming a refractive index modulated part 13₁. In this refractive index modulated part 13₁, letting A₁ be a line, perpendicular to a refractive index level plane L₁, intersecting the optical axis of the optical fiber 10, the angle formed between the line A₁ and the optical axis is θ₁, whereas the deflection angle plane M₁ formed by the line A₁ and the optical axis is parallel to the plane of the phase grating mask 20 (see Figs. 3 and 4A).

Irradiation with the refractive index change inducing light UV for a predetermined period of time in the state of arrangement shown in Fig. 4A as such forms the first refractive index modulated part 13₁. After the formation, the irradiation with refractive index change inducing light UV is interrupted, while the optical fiber 10 is rotated by a predetermined angle about the optical axis during this interruption, so as to attain the state of arrangement shown in Fig. 4B. Then, irradiation with the refractive index change inducing light UV for a predetermined period of time in the state of arrangement shown in Fig. 4B forms the second refractive index modulated part 13₂. In thus formed second refractive index modulated part 13₂, letting A₂ be a line, perpendicular to a refractive index level plane L₂, intersecting the optical axis of the optical fiber 10, the angle formed between the line A₂ and the optical axis is θ₂, whereas the deflection angle plane M₂ formed by the line A₂ and the optical axis is parallel to the plane of the phase grating mask 20. The deflection angle plane M₂ of the second refractive index modulated part 13₂ does not coincide with the deflection angle plane M₁ of the already formed first refractive index modulated part 13₁.

After the second refractive index modulated part 13₂ is formed, the irradiation with refractive index change inducing light UV is interrupted, while the optical fiber 10 is rotated by a predetermined angle about the optical axis during this interruption, so as to attain the state of arrangement shown in Fig. 4C. Then, irradiation with the refractive index change inducing light UV for a predetermined period of time in the state of arrangement shown in Fig. 4C forms the third refractive index modulated part 13₃. In thus formedthirdrefractive indexmodulatedpart 13₃, letting A₃ be a line, perpendicular to a refractive index level plane L₃, intersecting the optical axis of the optical fiber 10, the angle formed between the line A₃ and the optical axis is θ₃, whereas the deflection angle plane M₃ formed by the line A₃ and the optical axis is parallel to the plane of the phase grating mask 20. The deflection angle plane M₃ of the third refractive index modulated part 13₃ does not coincide with any of the deflection angle plane M₁ of the already formed first refractive index modulated part 13₁ and the deflection angle plane M₂ of the already formed second refractive index modulated part 13₂.

In a similar manner, the fourth to N-th refractive index modulated parts 13₄ to 13_{N} are formed successively. When forming the N-th refractive index modulated part 13_{N}, irradiation with the refractive index change inducing light UV for a predetermined period of time in the state of arrangement shown in Fig. 4D forms the N-th refractive index modulated part 13_{N}. In thus formed N-th refractive index modulated part 13_{N}, letting A_{N} be a line, perpendicular to a refractive index level plane L_{N}, intersecting the optical axis of the optical fiber 10, the angle formed between the line A_{N} and the optical axis is θ_{N}, whereas the deflection angle plane M_{N} formed by the line A_{N} and the optical axis is parallel to the plane of the phase grating mask 20. The deflection angle plane M_{N} of the N-th refractive index modulatedpart 13_{N} does not coincide with any of the deflection angle planes M₁ to M_{N-1} of the already formed first to (N-1)-th refractive index modulated parts 13₁ to 13_{N-1}.

Though individual values of θₙ are the same when the position of the phase grating mask 20 is held at a fixed position, the values of θₙ can be made different from each other if the phase grating mask 20 is rotated on a plane thereof. Also, though all the refractive index modulation periods along respective lines Aₙ in the refractive index modulated parts 13ₙ have the same value when a single phase grating mask 20 is used, the refractive index modulation periods along respective lines Aₙ in the refractive index modulated parts 13ₙ can be made different from each other if the phase grating mask is replaced with one having a different phase grating period.

Thus, in the method of making an optical waveguide type diffraction grating device in accordance with this embodiment, N refractive index modulated parts 13₁ to 13_{N} are successively formed along a longitudinal direction of the optical fiber 10 such that the line Aₙ perpendicular to the refractive index level plane Lₙ is not parallel to the optical axis of the optical fiber 10 (i.e., θₙ ≠ 0). Also, the n-th refractive index modulated part 13ₙ is formed such that its deflection angle plane Mₙ does not coincide with any of the respective deflection angle planes M₁ to Mₙ₋₁ of the already formed first to (n-1)-th refractive index modulated parts 13₁ to 13ₙ₋₁. Further, given two of the N refractive index modulated parts 13₁ to 13_{N} are formed such that their respective forming areas overlap each other at least partially. Thus, the tilt type diffraction grating device 1 in accordance with this embodiment is made.

In particular, it is preferred that the optical fiber 10 be rotated about the optical axis by a predetermined angle of 180 degrees/N after the (n-1)-th refractive index modulated part 13ₙ₋₁ is formed, and then the n-th refractive index modulated part 13ₙ be formed. In thus made tilt type diffraction grating device 1, the respective deflection angle planes M₁ to M_{N} of the N refractive index modulated parts 13₁ to 13_{N} shift from each other at intervals of 180 degrees/N about the optical axis of the optical fiber 10, whereby the polarization-dependent loss is efficiently reduced.

Preferably, the individual refractive index modulated parts 13ₙ are formed such that lines Aₙ perpendicular to respective refractive index level planes Lₙ form the same angle θₙ with the optical axis of the optical fiber 10, respective forming areas have the same length Dₙ along the longitudinal direction of the optical fiber 10, respective refractive index modulation periods are the same, and respective refractive index modulation amplitudes are the same. Thus made tilt type diffraction grating device 1 becomes one whose polarization-dependent loss is efficiently reduced.

Preferably, when forming each refractive index modulated part 13ₙ, the transmission loss or polarization-dependent loss of the tilt type diffraction grating device 1 in the process of making is monitored. Thus made tilt type diffraction grating device 1 becomes one whose polarization-dependent loss is efficiently reduced.

An example of the optical waveguide type diffraction grating device (tilt type diffraction grating device) 1 in accordance with this embodiment and method of making the same will now be explained. In this example, the optical fiber 10 was one in which not only the core region 11 but also the cladding region 12 was doped with GeO₂. The period of the phase grating mask 20 was not fixed but gradually changed along a direction perpendicular to the direction of grooves, with a center period of 1.0650 µm and a period changing rate of 10.0 nm/cm. Employed as the light source 30 was a KrF excimer laser light source outputting a laser beam having a wavelength of 248 nm as refractive index change inducing light.

Thus made tilt type diffraction grating device 1 of this example had two refractive index modulated parts 13₁, 13₂. The two refractive index modulated parts 13₁, 13₂ each had a forming area with a length of 5 mm and totally overlapped each other. The deflection angle plane M₁ of the refractive index modulated part 13₁ and the deflection angle plane M₂ of the refractive index modulated part 13₂ were orthogonal to each other.

In the manufacturing method of this example, the first refractive index modulated part 13₁ was initially formed, the optical fiber 10 was rotated by 90 degrees about the optical axis thereafter whiletheirradiation with refractive index change inducing light UV was interrupted, and then the second refractive index modulated part 13₂ was formed. When forming each of the two refractive index modulated parts 13₁, 13₂, the transmission loss of the tilt type diffraction grating device 1 in the process of making was monitored.

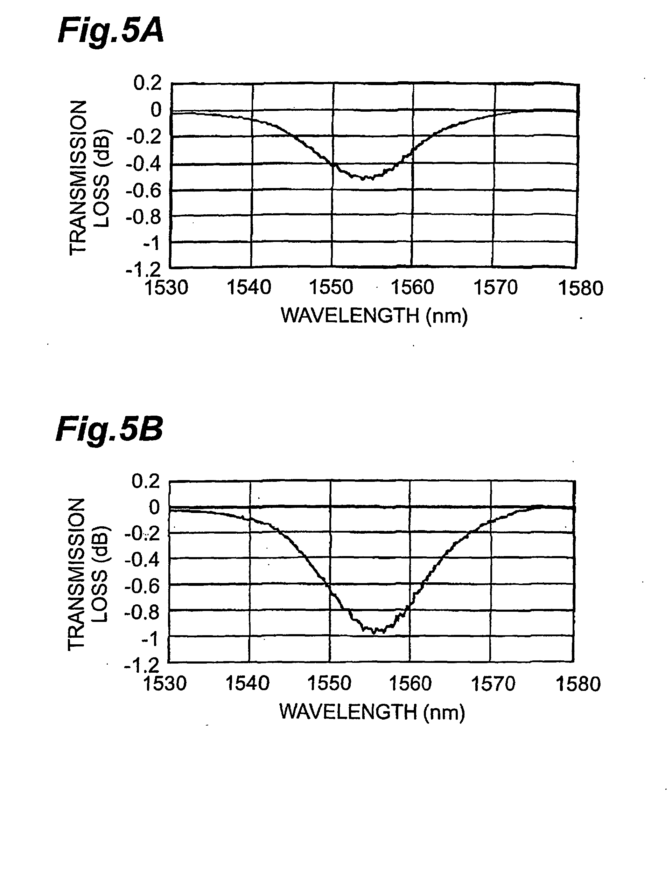

In this example, the target value of transmission loss at a wavelength yielding the maximum transmission loss was set to 1 dB. When forming the first refractive index modulated part 13₁, the irradiation with refractive index change inducing light UV was interrupted at the time when the monitored transmission loss became 1/2 (0.5 dB) of the target value. Subsequently, when forming the second refractive index modulated part 13₂, the irradiation with refractive index change inducing light UV was interrupted at the time when the monitored transmission loss became the target value (1 dB). Fig. 5A is a graph showing a transmission characteristic at the time when the first refractive index modulated part 13₁ was completely formed, whereas Fig. 5B is a graph showing a transmission characteristic at the time when the second refractive index modulated part 13₂ was completely formed. As shown in this graph, the maximum value of transmission loss in the tilt type diffraction grating device 1 in accordance with this example was 0.5 dB at the time when the first refractive index modulated part 13₁ was completely formed, and 1.0 dB at the time when the second refractive index modulated part 13₂ was completely formed.

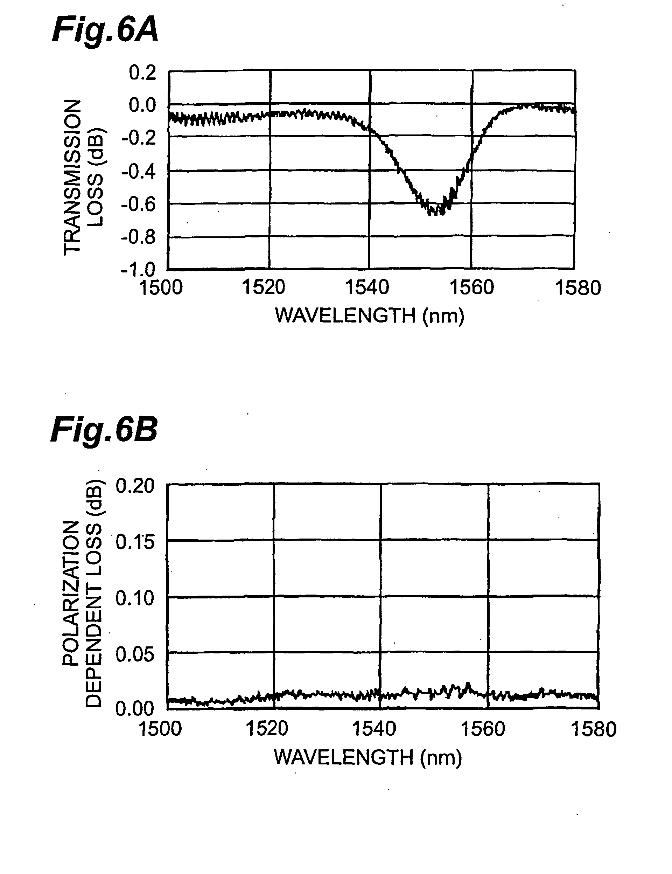

Fig. 6A is a graph showing a transmission characteristic of the tilt type diffraction grating device in accordance with this example, whereas Fig. 6B is a graph showing a polarization-dependent loss characteristic of the tilt type diffraction grating device in accordance with this example. Fig. 7A is a graph showing a transmission characteristic of the tilt type diffraction grating device in accordance with a comparative example, whereas Fig. 7B is a graph showing a polarization-dependent loss characteristic of the tilt type diffraction grating device in accordance with the comparative example. Here, the tilt type diffraction grating device in accordance with the comparative example has only one refractive index modulated part without overwriting.

As can be seen when Figs. 6A and 7A are compared with each other, the respective transmission spectra of the tilt type diffraction grating devices in accordance with the example and comparative example had forms similar to each other, each yielding the maximum transmission loss value of about 0.6 dB. However, as can be seen when Figs. 6B and 7B are compared with each other, the maximum polarization-dependent loss value of the tilt type diffraction grating device in accordance with the comparative example was about 0.125 dB, whereas the maximum polarization-dependent loss value of the tilt type diffraction grating device in accordance with the example was about 0.03 dB. The maximum polarization-dependent loss value of the tilt type diffraction grating device in accordance with the example was about 1/4 of the maximum polarization-dependent loss value of the tilt type diffraction grating device in accordance with the comparative example, and about 1/20 of the maximum transmission loss value of the tilt type diffraction grating device in accordance with the example.

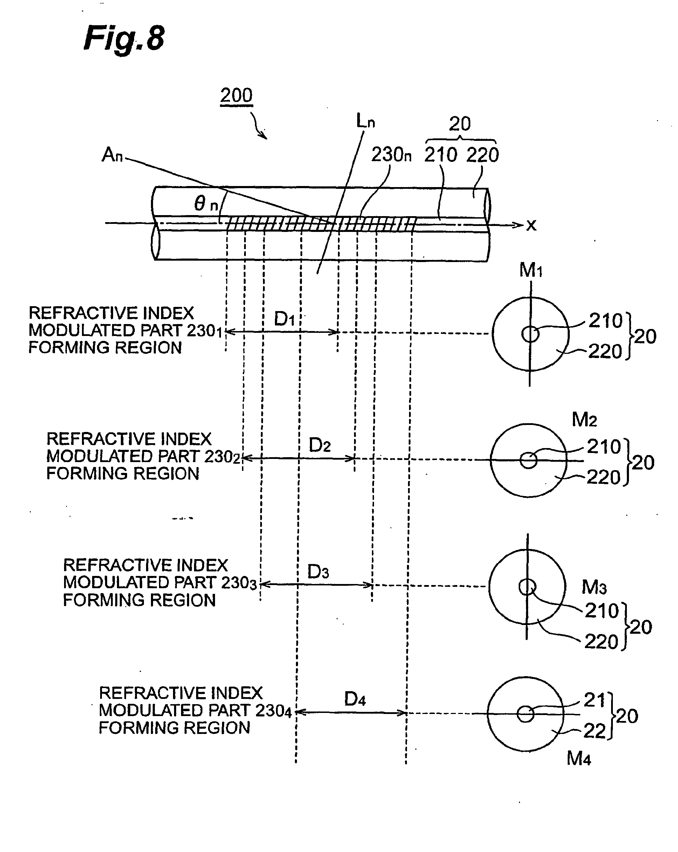

Fig. 8 is an explanatory view of an optical waveguide type diffraction grating device (tilt type diffraction grating device) 2 according to another embodiment. This drawing illustrates a sectional view cut along a plane including the optical axis, and a sectional view cut along a plane perpendicular to the optical axis. The tilt type diffraction grating device 200 according to this embodiment, which is illustrated in this drawing, has N (where N is an integer of 2 or above) refractive index modulated parts 230₁ - 23_{N} formed along the longitudinal direction of the optical fiber 20, which is the optical waveguide. The optical fiber 20 has silica glass as its base, and comprises a GeO₂-doped core region 21, and a cladding region 220 surrounding this core region 21.

For each refractive index modulated part 23ₙ (where n is an arbitrary integer not less than 1 and not greater than N), the refractive index level plane, wherein the refractive index becomes level, is expressed by Lₙ; the line perpendicular to the refractive index level plane Lₙ, intersecting the optical axis (x axis) of the optical fiber 20, is expressed by Aₙ; the angle formed between the line Aₙ and the optical axis is expressed by θₙ; and the deflection angle plane formed by the line Aₙ and the optical axis is expressed by Mₙ. The areas of formation, refractive index level plane Lₙ, line Aₙ, and angle θₙ of the refractive index modulated parts 23ₙ are all as previously explained.

This tilt type diffraction grating device 2 is characterized in that the deflection angle planes Mₙ of the refractive index modulated parts 23ₙ shift from each other at intervals of 360 degrees/N about the optical axis. Note that, in the drawing, N = 4. In this case, the double refraction characteristic which is caused by nonaxisymmetry in each of the refractive index modulated parts 23₁ and 23₃, the deflection angle planes Mₙ of which differ from each other by 180°, is offset, and since the double refraction characteristic which is caused by nonaxisymmetry in each of the refractive index modulated parts 230₃ and 23₄, the deflection angle planes Mₙ of which differ from each other by 180°, is offset, the polarization-dependent loss in the optical waveguide type diffraction grating device 2 is reduced efficiently. Note that here, nonaxisymmetry indicates that the rise in the refractive index is increasing on the incident side of the refractive index change-inducing light in the refractive index modulated part 23₁, which is formedby irradiating refractive index change-inducing light onto the optical fiber 20. Consequently, by forming the refractive index modulated parts 230₁ and 23₃ by irradiating refractive index change-inducing light onto the optical fiber 20 from opposite directions, the double refraction characteristic caused by the nonaxisymmetry [in these refractive index modulated parts] is offset.

In this tilt type diffraction grating device 2 also, it is suitable for the polarization-dependent loss to be 1/10 or less of the largest transmission loss value in the wavelength at which transmission loss is greatest. This kind of tilt type diffraction grating device 2 may also be used appropriately as an optical device (or one part thereof) in which low polarization-dependent loss is required, in the field of optical transmission, and for example, may be used appropriately as a gain equalizer for equalizing the gain in an optical fiber amplifier.

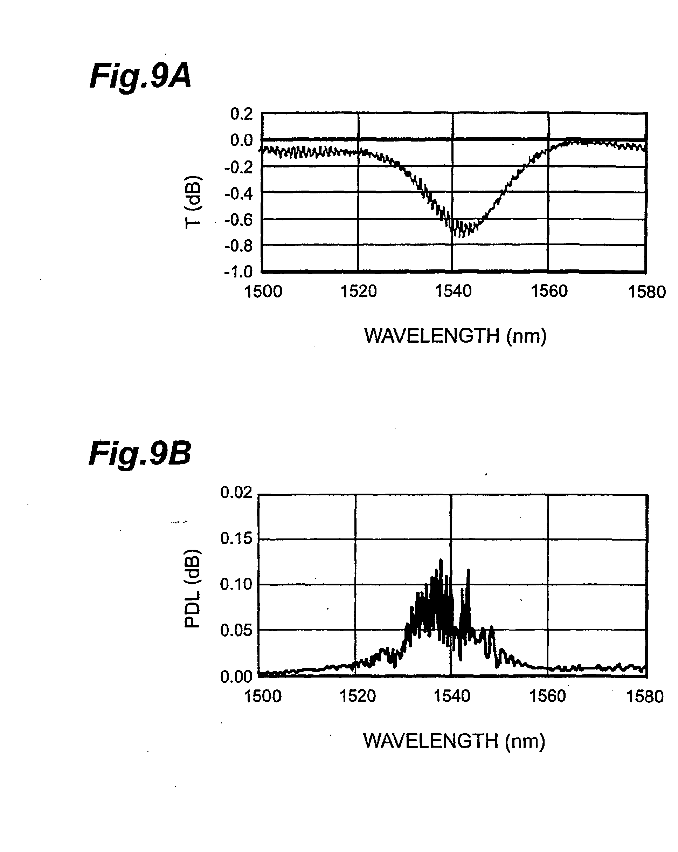

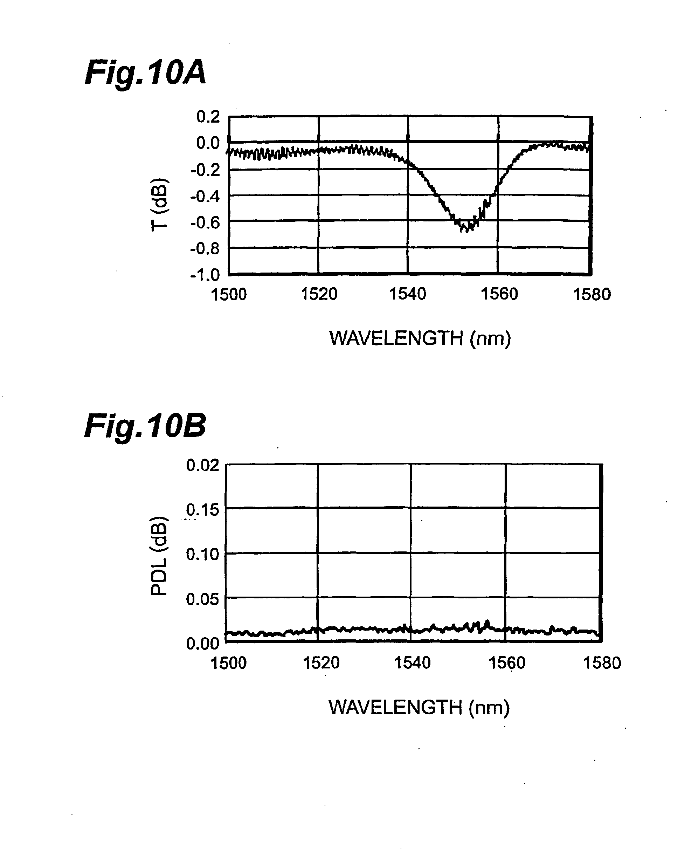

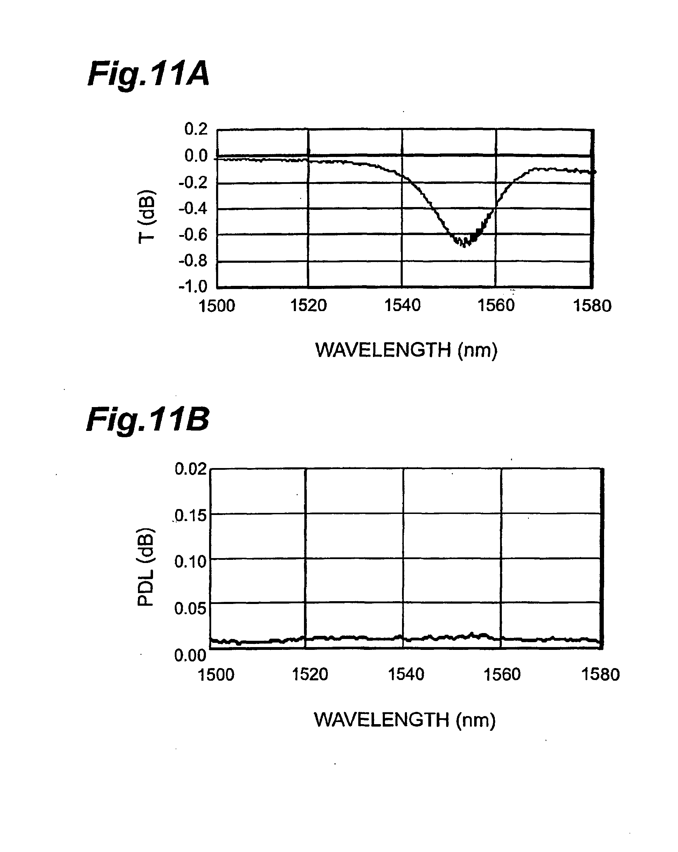

Figs. 9A to 11B are each graphs showing the wavelength dependence of the transmittance T and polarization-dependence loss PDL respectively in three types of tilt type diffraction grating devices. Figs. 9A and 9B are graphs showing characteristics of a tilt type diffraction grating device 1 in which refractive index change inducing light is irradiated from only one direction to form one refractive index modulated part. Figs. 9A and 9B are graphs showing characteristics of a tilt type diffraction grating device 2 in which refractive index change inducing light is irradiated from two directions which differ from each other by 90° to form two refractive index modulated parts. Figs. 11A and 11B are graphs showing characteristics of a tilt type diffraction grating device 2 in which refractive index change inducing light is irradiated from four directions, differing from each other by 90° at a time, to form four refractive index modulated parts.
In each of the tilt type diffraction grating device 1 and the tilt type diffraction grating device 2, the refractive index modulated parts are formed so as to overlap each other.

As can be understood by comparing Figs. 9A, 10A and 11A, the wavelength dependence of the transmittance T in each of the three types of tilt type diffraction grating device is substantially the same. On the other hand, as can be understood by comparing Figs. 9B, 10B and 11B, the polarization-dependencelossPDL ofthetilttype diffraction grating device formed with one refractive index modulated part reaches 0.127dB, whereas the polarization-dependence loss PDL of the tilt type diffraction grating device 1 is as small as 0.023dB, and the polarization-dependence loss PDL of the tilt type diffraction grating device 2 is, at 0.016dB, even smaller.

### Industrial Applicability

According to the present invention, as explained in detail in the foregoing, N (N being an integer not smaller than 2) refractive index modulated parts are formed, respective lines perpendicular to refractive index level planes of the refractive index modulated parts are not parallel to the optical axis of the optical waveguide, respective deflection angle planes of refractive index modulated parts do not coincide with each other, and given two refractive index modulated parts have respective forming areas overlapping each other at least partially. Thus configured optical waveguide type diffraction grating device becomes a short one whose polarization-dependent loss is reduced.

## Claims

1. An optical waveguide type diffraction grating device comprising N (Nbeing an integer not smaller than 2) refractive index modulated parts formed along a longitudinal direction of an optical waveguide;
wherein respective lines perpendicular to refractive index level planes of said N refractive index modulated parts are not parallel to an optical axis of said optical waveguide;
wherein respective deflection angle planes formed between lines perpendicular to refractive index level planes of said N refractive index modulated parts and said optical axis of said optical waveguide do not coincide with each other; and
where two of said N refractive index modulated parts have respective forming areas overlapping each other at least partially.

2. An optical waveguide type diffraction grating according to claim 1, wherein respective deflection angle planes of said N refractive index modulated parts shift from each other at intervals of 180 degrees/N about said optical axis of said optical waveguide.

3. An optical waveguide type diffraction grating according to claim 1, wherein respective deflection angle planes of said N refractive index modulated parts shift from each other at intervals of 360 degrees/N about said optical axis of said optical waveguide.

4. An optical waveguide type diffraction grating according to claim 1, wherein, in said N refractive index modulated parts, respective lines perpendicular to refractive index level planes form the same angle with said optical axis of said optical waveguide, respective forming areas have the same length along said longitudinal direction of said optical waveguide, respective refractive index modulation periods are the same, and respective refractive index modulation amplitudes are the same.

5. An optical waveguide type diffraction grating according to claim 1, wherein a polarization-dependent loss at a wavelength yielding the maximum transmission loss is not greater than 1/10 of the maximum transmission loss value.

6. A method of making an optical waveguide type diffraction grating device, said method comprising the step of forming an optical waveguide type diffraction grating device;
wherein, while successively forming N (N being an integer not smaller than 2) refractive index modulated parts along a longitudinal direction of an optical waveguide such that respective lines perpendicular to refractive index level planes are not parallel to an optical axis of said optical waveguide,
the n-th (nbeing an integer of at least 2 but not greater than N) refractive index modulated part is formed such that a deflection angle plane formed between a line perpendicular to a refractive index level plane and said optical axis of said optical waveguide does not coincide with any of respective deflection angle planes of the refractive index modulated parts of already formed first to (n-1)-th refractive index modulated parts; and
two of said N refractive index modulated parts have respective forming areas overlapping each other at least partially.

7. A method of making an optical waveguide type diffraction grating device according to claim 6, wherein respective deflection angle planes of said N refractive index modulated parts are shifted from each other at intervals of 180 degrees/N about said optical axis of said optical waveguide.

8. A method of making an optical waveguide type diffraction grating device according to claim 6, wherein respective deflection angle planes of said N refractive index modulated parts are shifted from each other at intervals of 360 degrees/N about said optical axis of said optical waveguide.

9. A method of making an optical waveguide type diffraction grating device according to claim 6, wherein said N refractive index modulated parts are formed such that respective lines perpendicular to refractive index level planes form the same angle with said optical axis of said optical waveguide, respective forming areas have the same length along said longitudinal direction of said optical waveguide, respective. refractive index modulation periods are the same, and respective refractive index modulation amplitudes are the same.

10. A method of making an optical waveguide type diffraction grating device according to claim 6, wherein each of said N refractive index modulated parts is formed while monitoring a transmission loss.

11. A method of making an optical waveguide type diffraction grating device according to claim 6, wherein each of said N refractive index modulated parts is formed while monitoring a polarization-dependent loss.
